Europäisches Patentamt

European Patent Office

Office européen des brevets

(19)

(11) Veröffentlichungsnummer: **0 298 468**

**A1**

(12)                     EUROPÄISCHE PATENTANMELDUNG

(21) Anmeldenummer: 88110830.2

(22) Anmeldetag: 07.07.88

(51) Int. Cl.⁴: **B01D 46/44 , G01N 15/06**

(30) Priorität: 09.07.87 DE 3722693

(43) Veröffentlichungstag der Anmeldung:
11.01.89 Patentblatt 89/02

(84) Benannte Vertragsstaaten:
AT BE DE FR GB IT NL

(71) Anmelder: **ACCUMULATORENFABRIK
SONNENSCHEIN GMBH
Thiergarten Postfach 1180
D-6470 Büdingen 1 Oberhessen(DE)**

(72) Erfinder: **Barckmann, Claus, Dipl.-Ing.
Am Lautenstein 2
D-6470 Büdingen(DE)**
Erfinder: **Hoenigs, Michael. Dipl.-Ing.
Hessenring 38
D-6365 Rossbach(DE)**
Erfinder: **Buro, Dieter
Obere Dorfstrasse 14
D-3320 Alfeld(DE)**
Erfinder: **Piske, Günter, Dipl.-Chem.
Im Flachsgrund 14
D-6470 Büdingen(DE)**

(74) Vertreter: **Baumann, Eduard, Dipl.-Phys.
Postfach 1201 Sattlerstrasse 1
D-8011 Höhenkirchen/München(DE)**

(54) Überwachungseinrichtung für die Qualität eines Arbeitsfilters.

(57) Die Erfindung bezieht sich auf eine Überwachungseinrichtung für die Qualität eines Arbeitsfilters (17), das staubförmige Verunreinigungen aus der durchströmenden Luft absorbiert.

Bisherige Verfahren zur Feststellung der Funktionsbereitschaft eines Arbeitsfilters waren sehr kostenintensiv und erforderten darüber hinaus lange Auswertezeiten. Durch die Erfindung soll eine einfache und damit billige, jedoch hochwirksame und rasch anzeigende Überwachungseinrichtung geschaffen werden.

Das Prinzip liegt darin, in den Luftstrom hinter dem Arbeitsfilter eine Reflexionseinrichtung (5) einzuführen, wobei eine Strahlungsquelle (6) Licht über die Reflexionseinrichtung (5) einem Strahlendetektor (7) sendet. Ist der Spiegel stark mit Staub belegt, so ist dies ein Hinweis auf eine Funktionsstörung des Arbeitsfilters (1). Dieser Belag führt zu einer entsprechend starken Schwächung des austretenden und vorzugsweise in den Strahlendetektor (7) eintretenden Lichtes.

Fig. 1

# Überwachungseinrichtung für die Qualität eines Arbeitsfilters

Die Erfindung bezieht sich auf eine Überwachungseinrichtung gemäß dem Oberbegriff des Anspruches 1.

Insbesondere bezieht sich die Erfindung auf eine Überwachungseinrichtung für die Qualität eines Arbeitsfilters, das in eine Absauganlage für Luft integriert ist, die nach der Reinigung wieder den Arbeitsplätzen zugeführt werden soll.

Die Überwachung derartiger Filter, die für die Umwelt unter Umständen sehr schädliche Staubteilchen absorbieren, ist aus Umweltschutzgründen erforderlich. Besonders bedeutsam ist diese Notwendigkeit, wenn die so belastete Luft wieder den Arbeitsplätzen als Atemluft für die dort beschäftigten Personen dienen soll, einschließlich Reinsträumen in Operationssälen oder bei der Halbleiter- und Pharmaindustrie.

Bisher wurden zu diesem Zwecke hinter dem Filter äußerst aufwendige Gasmeßeinrichtungen eingesetzt, bei denen der Luftstrom eine bestimmte Zeitdauer, in der Regel mehr als 15 Minuten lang, durch das Gerät hindurch geführt wurde, und die einzelnen enthaltenen Substanzen auf physikalisch-chemischem Weg analysiert wurden. Ergaben die Messungen Abweichungen von den Regelwerten, so konnte erst ein entsprechendes Alarmsignal ausgelöst werden. Aus Sicherheitsgründen ist häufig in einem Abstand hinter dem ersten Arbeitsfilter ein zweites Sicherheitsfilter eingesetzt. Sollte das erste Filter defekt werden, beispielsweise ein Loch bekommen, oder die Absorptionsfähigkeit erschöpft sein, so ist noch ein zweites Sicherheitsfilter gleicher Qualität vorhanden, um ein Entweichen von Substanzen nach außen zu verhindern. Übliche Meßgeräte werden in der Regel aus praktischen Gründen hinter dem Sicherheitfilter angeordnet. Diese Geräte müssen daher so empfindlich sein, daß sie bei Ausfall des Arbeitsfilters noch geringfügige Erhöhungen des Staubanteiles an der durchströmenden Luft erkennen können, die beim Ausfall des Arbeitsfilters auftreten.

Der Erfindung liegt die Aufgabe zugrunde, eine Überwachungseinrichtung gemäß dem Oberbegriff des Anspruches 1 so auszubilden, daß bei erheblich abgesenkten Kosten eine hochwirksame und rasch anzeigende Überwachungseinrichtung geschaffen wird.

Die Aufgabe wird erfindungsgemäß durch den Anspruch 1 gelöst. Weitere Ausgestaltungen der Erfindung sind in den Unteransprüchen unter Schutz gestellt.

Das Grundprinzip liegt darin, hinter das Arbeitsfilter eine Reflexionseinrichtung für Strahlen anzubringen, die dem Luftstrom ausgesetzt ist, ohne daß jedoch der Luftstrom selbst wesentlich beeinträchtigt werden soll. Da die auf die reflektierende Fläche der Reflexionseinrichtung auftreffende Luft nur extrem wenig Staubanteile enthält, im Falle von Blei etwa 0,0005 mg Blei/m3, bleibt die reflektierende Fläche praktisch unverändert durch den auftreffenden Luftanteil. Läßt man daher auf die Reflexionseinrichtung Strahlung auftreffen, die von dieser reflektiert wird, so ist keine nennenswerte Schwächung des austretenden Strahls zu beobachten. Dieser austretende Strahl kann unmittelbar als Überwachung für das Arbeitsfilter herangezogen werden. Zweckmäßiger ist es jedoch, diesen Strahl auf einen entsprechenden Strahlendetektor auftreffen zu lassen, der ein entsprechendes auswertbares elektrisches Signal liefert.

Bei gut funktionierendem Arbeitsfilter setzt sich im Laufe langer Einsatzzeiten eine gewisse Staubschicht auf der Reflexionseinrichtung fest, die lediglich zu einer geringfügigen allmählichen Reduktion des austretenden Strahles führt. Ist die Funktion des Arbeitsfilters jedoch ernsthaft gestört, beispielsweise durch ein Loch, oder auch durch völlige Erschöpfung des Filters nach langer Einsatzzeit, so tritt erheblich mehr Staub durch das Arbeitsfilter hindurch.

Dies führt zu einer erheblich stärkeren Belegung der Reflexionseinrichtung und dadurch auch zu einer erheblich stärkeren Schwächung des austretenden Strahles. Falls das Arbeitsfilter ein Loch aufweist, so tritt sogar ein ganz plötzlicher Abfall des Strahles aufgrund eines ganz plötzlich auftretenden starken Belages der Reflexionseinrichtung auf.

Vorzugsweise wird das vom Strahlendetektor erzeugte Signal einer Auswerteschaltung zugeführt. Diese kann beispielsweise bei Unterschreiten eines bestimmten Minimumsignales Alarm auslösen, gleichzeitig die Filteranlage abstellen etc., um das Filter überprüfen, gegebenenfalls reinigen oder austauschen zu können. die Auswerteschaltung kann jedoch auch so geschaltet werden, daß das Differenzsignal zwischen bestimmten Zeitabständen gemessen wird. Überschreitet dieses Differenzsignal einen bestimmten Wert, so kann ebenfalls Alarm ausgelöst werden. Dieses Signal zeigt insbesondere in kürzester Zeit an, wenn etwa durch ein Loch im Arbeitsfilter schlagartig verunreinigte Luft austritt. Dies führt daher zu einem sehr raschen Alarm.

Wegen der kurzen Ansprechzeit sollte diese Überwachungseinrichtung das Vorsehen eines zweiten Sicherheitsfilters hinter dem Arbeitsfilter erübrigen. Ist jedoch ein derartiges Sicherheitsfilter vorgesehen, so kann die Reflexionseinrichtung zweckmäßigerweise zwischen den beiden Filtern vorgesehen werden.

Die Reflexionseinrichtung soll im Verhältnis zum Filterquerschnitt sehr geringe Ausmaße haben, um den Luftstrom nicht wesentlich zu beeinträchtigen. Es kann ein kleiner zentral angeordneter Spiegel vorgesehen werden, oder es können mehrere um den Filterquerschnitt verteilte kleine Spiegel vorgesehen werden, die zweckmäßigerweise in einem schrägen Winkel zur Luftstromrichtung angebracht sind, um eine Reflexion des auf den Spiegel auftreffenden Strahles und einen Strahlenaustritt aus dem Filtergehäuse zu ermöglichen, das an dieser Stelle selbstverständlich strahlendurchlässig gestaltet sein muß, soweit nicht auf eine Wandung wenigstens in diesem Bereich verzichtet werden kann.

Zweckmäßigerweise läßt sich die Überwachungseinrichtung in einer Luftabsauganlage einsetzen, wobei Luft von einem Arbeitsplatz abgesaugt und ins Freie geführt wird. Um in der Heizperiode Energieverluste nach Möglichkeit zu vermeiden, kann die gereinigte Luft auch unmittelbar wieder dem Arbeitsplatz zugeführt werden. Aus Sicherheitsgründen empfiehlt sich insbesondere in diesem Falle das Vorsehen eines zweiten Sicherheitsfilters.

Ein Ausführungsbeispiel der Erfindung ist in der Zeichnung dargestellt. Es zeigt:

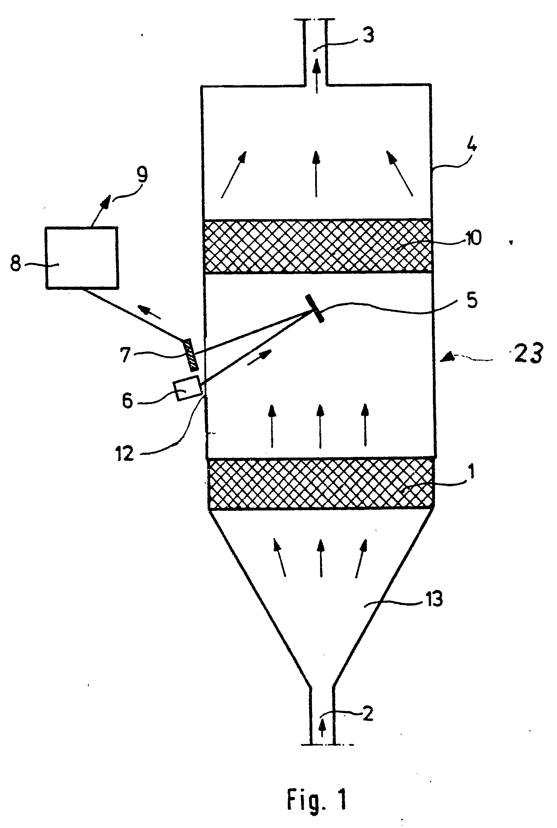

Figur 1 im Schnitt eine Filtereinrichtung mit Überwachungseinrichtung,

Figur 2 eine Absauganlage für Luft unter Einsatz einer Überwachungseinrichtung.

Figur 3 ein anderes Beispiel einer Überwachungseinrichtung.

In der Zeichnung sind gleiche Teile mit gleichen Bezugszeichen versehen. Das erste Arbeitsfilter ist mit (1) bezeichnet und in einem Filtergehäuse (4) angeordnet. Die mit Verunreinigungen wie beispielsweise bleihaltigem Staub angereicherte Abluft wird über eine Absaugleitung (2) und eine trichterförmige Erweiterung (13) von unten dem Arbeitsfilter (1) in Pfeilrichtung zugeführt. Die gereinigte Luft tritt in Pfeilrichtung aus dem Arbeitsfilter (1) aus und durch das in einem Abstand hierzu angeordneten Sicherheitsfilter (10) hindurch. Hinter dem Sicherheitsfilter (10) wird die gereinigte Luft der Ableitung (3) zugeführt. Die gesamte Filtereinrichtung ist mit (23) bezeichnet. Auf der linken Seite des Filtergehäuses (4) ist eine Strahlungsquelle in Form einer fokussierten Lichtquelle (6) angeordnet, die über eine lichttransparente Wand (12) des Filtergehäuses (4) auf eine Reflexionseinrichtung in Form eines Spiegels (5) auftrifft. Die reflektierende Fläche des Spiegels (5) ist unter einem Winkel von etwa 45° dem durch das Arbeitsfilter (1) herangeführten Luftstrom zugewandt. Der Lichtstrahl tritt an der gleichen Seite aus der lichtdurchlässigen Wand (12) aus und wird auf einen Strahlendetektor in Form einer Fotozelle (7) fokussiert.

Die Fotozelle (7) erzeugt ein dem auftreffenden Licht proportionales elektrisches Signal, das einer Auswerteschaltung (8) zugeführt wird. Auf die vorstehend näher beschriebene Art löst die Auswerteschaltung (8) ein Alarmsignal (9) für den Fall aus, daß die vorgegebenen Werte unterschritten beziehungsweise überschritten werden. Dies ist bei einer überdurchschnittlich starken Belegung des Spiegels (5) der Fall, was bei einer Funktionsstörung des Arbeitsfilters (1) auftritt.

Es sei erwähnt, daß statt des beispielshaft gezeigten Spiegels (5) verschiedenste Spiegeleinrichtungen oder Strahlungseinrichtungen einschließlich Strahlungen aus dem Infrarotbereich, UV-Bereich etc. möglich sind. Es ist auch möglich, die Spiegel etwa parallel zur Filterfläche anzuordnen und den Strahlendetektor auf der gegenüber liegenden Seite des Filtergehäuses (4) anzuordnen. Weiterhin ist die Überwachungseinrichtung nicht auf Luft beschränkt, sondern prinzipiell für sämtliche Gase anwendbar.

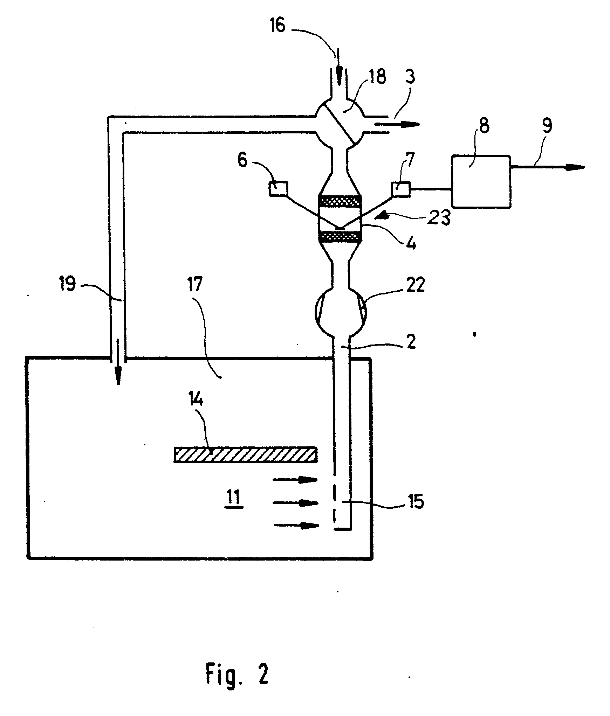

Figur 2 zeigt in schematatischer Form eine Absauganlage. Unter einer Arbeitsplatte (14), die den Arbeitsplatz symbolisch darstellen soll, wird die beispielsweise mit Bleistaub verunreinigte Luft einer lediglich symbolisch dargestellten Auffangeinrichtung (15) zugeführt, mit der die Absaugleitung (2) in Verbindung steht. Für die Absaugung ist ein Absaugventilator (22) vorgesehen, der die Luft durch die Filtereinrichtung (23) hindurch einem Vierwegeventil (18) zuführt. Die gereinigte Luft kann je nach Ventilstellung ins Freie entweichen oder mit Frischluft der Frischluftleitung (16) vermischt über eine Zuluftleitung (19) zurück zum Arbeitsplatz (17) geführt werden. Hierbei sind verschiedenste Mischverhältnisse möglich.

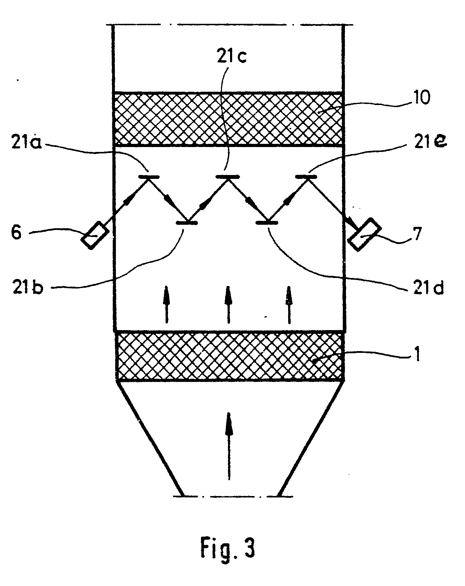

Figur 3 zeigt ein anderes Ausführungsbeispiel einer Reflexionseinrichtung, wobei mehrere Reflexionsflächen (21 a bis 21 e) in Form von kleinen Spiegeln im Bereich hinter dem Arbeitsfilter (1) angeordnet sind. Diese Spiegel sind sowohl seitlich als axial in einer derartigen geometrischen Anordnung gegeneinander versetzt, daß ein von einer Lichtquelle (6) auf den ersten Spiegel (21 a) auftreffender Lichtstrahl nacheinander von allen Spiegeln reflektiert wird und vom letzten Spiegel (21 e) zum außliegenden Strahlungsempfänger (7) gelangt. Die Pfeilrichtung deutet die Luftströmung an, mit (13) ist der Eingangstrichter für die Abluft bezeichnet.

Bei der Anordnung gemäß Figur 3 prallt der Luftstrom, gegebenenfalls mit den staubförmigen Verunreinigungen, zunächst auf die Spiegel auf, deren Reflexionsflächen dem Luftstrom zugewandt sind, nämlich auf die Reflexionsflächen (21 a, 21 c, 21 e). Wenn diese Reflexionsflächen nicht elektrostatisch aufgeladen sind, so fällt bei senkrechter Anordnung der Filteranlage der größte Teil des auftreffenden Staubes wieder nach unten, es dürfte sich somit kein großer Meßeffekt ergeben. Anders liegt es jedoch mit den axial näher zum Arbeitsfilter (1) angeordneten Spiegeln (21 b und 21 d), deren Reflexionsflächen dem Arbeitsfilter (1) abgewandt sind. Der von den anderen, dem Arbeitsfilter (1) zugewandten Reflexionsflächen abfallende Staub sowie der sonst im Raum hinter dem Arbeitsfilter (1) in der Luft schwebende Staub kann sich auf diese Reflexionsflächen (21 b und 21 d) anlegen. Diese Spiegel verursachen somit eine deutlich stärkere Schwächung des mehrfach reflektierten Lichtstrahles. Auf diese Weise kann die Anzeigegenauigkeit und die Anzeige-Empfindlichkeit der Gesamtanordnung deutlich verbessert werden.

**Ansprüche**

1 Überwachungseinrichtung für die Qualität eines Arbeitsfilters (1), das staubförmige Verunreinigungen aus der durchströmenden Luft absorbiert, gekennzeichnet durch

a) eine hinter dem Arbeitsfilter (1) im Filtergehäuse (4) angeordnete, dem Luftstrom wenigstens teilweise zugewandte Reflexionseinrichtung (5), die Staub absorbieren kann,

b) eine außerhalb des Luftstromes angeordnete Strahlungsquelle (6), die Strahlung zur Reflexionseinrichtung (5) leitet, wobei die auftreffende Strahlung teilweise nach außen reflektiert wird.

c) einen Strahlungsempfänger (7) für die reflektierte Strahlung.

2. Einrichtung nach Anspruch 1, dadurch gekennzeichnet, daß als Reflexionseinrichtung (5) ein oder mehrere gleichmäßig verteilte, in Bezug zum Filterquerschnitt sehr kleine Spiegel vorgesehen sind.

3. Einrichtung nach Anspruch 1, dadurch gekennzeichnet, daß als Reflexionseinrichtung (5) ein sehr grobmaschiges, starres Gewebe vorgesehen ist, an dessen Kreuzungspunkten winzige Spiegel angeordnet sind.

4. Einrichtung nach einem der Ansprüche 1 bis 3, dadurch gekennzeichnet, daß als Strahlungsquelle (6) seitlich vom Arbeitsfilter (1) eine Lichtquelle vorgesehen ist, die einen fokussierten Lichtstrahl auf den oder die Spiegel projiziert, wobei der Lichtstrahl an die gleiche oder an die gegenüberliegende Seite des Arbeitsfilters reflektiert wird.

5. Einrichtung nach einem der Ansprüche 1 bis 4, dadurch gekennzeichnet, daß die Reflexionseinrichtung (5) aus mehreren Reflexionsflächen besteht, die in Strömungsrichtung derartig gegeneinander versetzt sind, daß auf einigen, der Strömungsrichtung abgewandten, Reflexionsflächen Staub abgelagert wird.

6. Einrichtung nach einem der Ansprüche 1 - 6, dadurch gekennzeichnet, daß die Reflexionseinrichtung (5) bzw. die Reflexionsflächen (21 a - 21 f) elektrostatisch aufgeladen sind.

7. Einrichtung nach einem der Ansprüche 1 bis 6, dadurch gekennzeichnet, daß der von der Reflexionseinrichtung (5) reflektierte Strahl, vorzugsweise Lichtstrahl, auf einen Strahlungsempfänger, vorzugsweise eine Fotozelle (7), auftrifft, der ein der empfangenen Strahlung proportionales elektrisches Signal erzeugt, wobei der Strahl vorzugsweise auf den Strahlungsempfänger fokussiert ist, wobei ein zweiter Strahlungsempfänger zum Empfang eines von Staub unbeeinflußten Bezugssignales vorgesehen werden kann.

8. Einrichtung nach Anspruch 5, dadurch gekennzeichnet, daß das vom Strahlungsdetektor (7) erzeugte Signal einer Auswerteschaltung (8) zugeführt wird, die bei Unterschreiten eines elektrischen Minimumsignales oder bei einem starken Signalabfall innerhalb einer bestimmten Zeitdauer ein Alarmsignal (9) erzeugt.

9. Einrichtung nach einem der Ansprüche 1 bis 6, gekennzeichnet durch ein zweites, in einem Abstand hinter dem ersten Arbeitsfilter (1) vorgesehenes Sicherheitsfilter (10) gleicher Qualität, wobei die Reflexionseinrichtung (5) zwischen den beiden Filtern (1, 10) angeordnet ist.

10. Einrichtung nach einem der Ansprüche 1 bis 7, dadurch gekennzeichnet, daß das Arbeitsfilter (1) und gegebenenfalls das Sicherheitsfilter (10) in einem geschlossenen Gehäuse angeordnet sind, wobei wenigstens der Strahlendurchgangsbereich zwischen äußerer Strahlungsquelle (6), Reflexionseinrichtung (5) und gegebenenfalls Strahlungsempfänger (7) strahlendurchlässig ausgebildet ist.

11. Einrichtung nach einem der Ansprüche 1 bis 8, gekennzeichnet durch die Integration in eine Absauganlage mit Absaugleitungen, über welche mit Staub etc. verunreinigte Luft über das erste Arbeitsfilter (1) und vorzugsweise ein zweites Sicherheitsfilter (10) gleicher Qualität von einem Arbeitsplatz (11) nach außen abgesaugt und vorzugsweise wenigstens teilweise nach erfolgter Reinigung wieder dem Arbeitsplatz zugeführt werden kann.

12. Einrichtung nach Anspruch 11, dadurch gekennzeichnet, daß die verunreinigte Luft über eine Absaugleitung (2), einen Absaug-Ventilator (22) und die Filtereinrichtung (23) einem Vierwegeventil (18) zugeführt wird, wo sie gereinigt und teilweise mit Frischluft einer Frischluftleitung (16) vermischt über eine Zufuhrleitung (19) wieder dem Arbeitsplatz zugeführt wird.

13. Verfahren zum Überwachen eines Gasstromes auf Verunreinigungen mit Feststoffpartikeln, insbesondere hinter einem Arbeitsfilter (1),

dadurch gekennzeichnet, daß im Gasstrom wenigstens eine diesem wenigstens teilweise zugewandte Reflexionseinrichtung angeordnet und die reflektierte Strahlung gemessen wird.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 654 726 (SIEMENS AG) <br> * Insgesamt * <br> --- | 1,8 | B 01 D 46/44 <br> G 01 N 15/06 |
| A | FR-E- 92 265 (COMMISSARIAT A L'ENERGIE ATOMIQUE) <br> * Insgesamt * <br> --- | 2,4,8 | |
| A | US-A-3 526 461 (B.O. LINDAHL) <br> --- | | |
| A | FR-A-2 258 693 (SULZER FRERES S.A.) <br> ----- | | |

**RECHERCHIERTE SACHGEBIETE (Int. Cl.4)**

B 01 D 46/00
G 01 N 15/00

Der vorliegende Recherchenbericht wurde für alle Patentansprüche erstellt

| Recherchenort | Abschlußdatum der Recherche | Prüfer |
|---|---|---|
| DEN HAAG | 01-09-1988 | POLESAK, H.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)